# EUROPEAN PATENT APPLICATION

(11) **EP 0 728 782 A1**
(43) Date of publication of application: **28.08.1996**
(21) Application number: 95301215.0
(22) Date of filing: 24.02.1995
(51) Int. Cl.: C08G 18/62, C09D 133/06

(54) **Thermosetting vinylic powder coating composition**

(71) Applicant: KANSAI PAINT CO. LTD., Amagasaki-shi Hyogo-ken (JP)
(72) Inventor: Ookoshi, Toshio, Hiratsuka-shi, Kanagawa-ken (JP); Kawamoto, Yuugen, Hiratsuka-shi, Kanagawa-ken (JP); Tatsuno, Tadayoshi, Hiratsuka-shi, Kanagawa-ken (JP)
(74) Representative: Stuart, Ian Alexander

(57) **Abstract**

A thermosetting vinylic powder coating composition comprising (A) a vinylic copolymer prepared by copolymerizing, as a main component, a vinyl monomer having glycidyl functionality, and having a glass transition temperature of 40 to 100°C and a number average molecular weight of 1,500 to 15,000; (B) aliphatic dibasic acid; (C) blocked polyisocyanate compound; (D) optionally an acid anhydride; and (E) antioxidant provides an excellent combination of chemical stability, scratch and weather resistance, and smooth surfaces upon application.

## Description

This invention relates to thermosetting vinylic powder coating compositions. Preferred embodiments have good storage stability and are capable of forming a scratch and weather resistant coating with a smooth surface.

In recent years, there has been a growing interest in powdered coating compositions from the viewpoint of lowering air pollution and protecting the environment, leading to increased practical applications of such compositions. Generally, thermosetting acrylic powder coating compositions have been utilized to enhance finish appearances and improve weatherability.

Crosslinking of thermosetting acrylic powder coating compositions has been described in different patents and publications. U.K. Patents 1,338,204 and 1,429,758 describe crosslinking of an acrylic copolymer having glycidyl groups by using a dibasic acid or an polyacid anhydride. Crosslinking of an acrylic copolymer having hydroxyl groups by using blocked isocyanate or a melamine resin is disclosed in Japanese Patent application Kokai (Laid-Open) No. 94727/1974 and No. 117530/1974. Acrylic copolymers having carboxyl groups can be crosslinked by means of epoxy resins or triglycidyl isocyanurate or beta-hydroxy alkylamide, as described in U.S. Patent 4,727,111.

Dodecanoic acid is most commonly used for crosslinking of acrylic copolymers containing gylcidyl groups, because the resulting composition is capable of forming a coating having an excellent finish appearance with improved weatherability. Coatings made by existing methods, however, readily deteriorate on substrate surfaces upon prolonged exposure to salty air or automatic car washes, in combination with severe natural conditions. Previous attempts, by the present inventors, to improve scratch resistance of the coatings have resulted in poor finished appearance and poor stability of the coating compositions, hindering prolonged storage.

There is thus a need for a thermosetting vinylic powder coating composition that will be scratch and weather resistant, have smoother surfaces, be chemically stable thus facilitating prolonged storage, and lower the drawbacks of the compositions of the prior art.

The present invention provides a thermosetting vinylic powder coating composition, which comprises a vinylic copolymer having glycidyl groups, an aliphatic dibasic acid, a blocked polyisocyanate compound, optionally an acid anhydride, and an antioxidant. The present coating compositions have improved scratch resistance, improved resistance to weather induced surface deterioration, and are capable of forming smoother surfaces upon application. In addition, the present invention provides a powdered coating composition that is chemically stable thus facilitating prolonged storage.

Specifically, the present invention provides:
A thermosetting vinylic powder coating composition which comprises:
(A) about from 40 to 85 % by weight of vinylic copolymer having glycidyl functionality;
(B) about from 5 to 25 % by weight of aliphatic dibasic acid;
(C) about from 5 to 35 % by weight of blocked polyisocyanate compound; and
(D) up to about 35 % by weight of acid anhydride, and
(E) antioxidant in an amount of 0.1 to 5% by weight; the total amount of components (B), (C), (D) and (E) being in the range 15 to 60% by weight.

The thermosetting vinylic powder coating compositions provided by the present invention comprise vinylic copolymer, aliphatic dibasic acid, blocked polyisocyanate, optionally acid anhydryde, and antioxidant.

Less than about 40%, and more than about 85% of the vinylic copolymer (A) can adversely affect the cured coating. Less than about 5% of aliphatic dibasic acid (B) reduces scratch resistance and durability of the cured coating, while an amount more than about 25 % of component (B) fails to produce a smooth surfaced coating. When no acid anhydride (D) is present, the quantity of aliphatic dibasic acid is typically at least about 10% by weight. An amount less than about 5% of (C) reduces scratch resistance and durability of the cured coating, while an amount more than about 35% fails to produce a smooth surfaced coating film. The acid anhydride (D), when used, is present in an amount which is 5-35% of the total weight of the composition. An amount less than about 0.1% of component (E) causes yellowing of the cured coating, while an amount more than about 5% of component (E) produces a poor durability of the coating film.

Coating compositions of the present invention can contain organic pigments such as Quinacridone Red, Pigment Red, Phthalocyanine Blue, Phthalocyanine Green and the like; inorganic pigments such as titanium dioxide, calcium carbonate, barium sulfate, clay, talc, silica and the like; carbon-based pigments such as carbon black, graphite and the like; metallic pigments such as metallic oxide-coated micaceous iron oxide, alminum flakes and the like; rust-preventive pigments such as red iron oxide, strontium chromate, zinc phosphate and the like; catalysts for promoting the curing such as dibutyltin diacetate, dibutyltin dioctate, dibutyltin dilaurate, triethylamine, diethanolamine and the like; ultraviolet absorbing agents such as benzophenone derivatives, benzotriazole derivatives, salicylate derivatives and the like; and other additives with flow leveling/controlling defoamers and the like. These additional components are used in quantities and combinations known to those skilled in the art.

### SYNTHESIS

Components (A), (B), (C), (D) and (E) of the present invention can be prepared in a number of ways well known to one skilled in the art. These different components can be synthesized using the methods described below, together with other methods known in the art, or variations thereon as appreciated by those skilled in the art. Some of the preferred methods are described below.

### VINYLIC COPOLYMER (A)

The vinylic copolymer (A), having glycidyl functionality used in the present invention desirably has a glass transition temperature of about from 40° to 100°C, the preferred glass transition temperature being 50° to 80°C. The average molecular weight of the vinylic copolymer (A) may be about from 1,500 to 15,000, the preferred molecular weight being 2,500 to 6,000. When the glass transition temperature of the copolymer is lower than about 40°C, undesired caking may occur during storage, while a copolymer having a glass transition temperature of higher than about 100°C often fails to produce a smooth-surfaced coating film. If the molecular weight of the copolymer is lower than about 1,500, undesired caking of the composition occurs during storage and, furthermore, it results in a coating film inferior in scratch resistance or weatherability, while the copolymer having a molecular weight higher than about 15,000 fails to produce a smooth-surfaced film coating.

The vinylic copolymer (A) can be obtained by copolymerizing a vinylic monomer having glycidyl functionality, or other copolymerizable monomers. Examples of the vinylic monomer having a glycidyl group are glycidyl (meth)acrylate, glycidyl acrylate, allyl glycidyl ether, glycidyl styryl ether, 4-vinylcyclohexene-1-oxide, 5-vinylbicyclo[2,2,1] hepto-2-ene-2-oxide, limonene oxide and the like.

The vinylic copolymer of component (A) of the present invention may be prepared by copolymerizing a vinylic monomer having a glycidyl group, the (meth)acrylate monomer, the aromatic vinylic monomer or the other vinylic monomers. Examples of the monomer include alkyl or cycloalkyl esters of (meth)acrylic acid, such as methyl (meth) acrylate, ethyl (meth) acrylate, n-butyl (meth)acrylate, isobutyl (meth)acrylate, tert-butyl (meth)acrylate, 2-ethylhexyl (meth)acrylate, cyclohexyl (meth)acrylate and the like; vinylic aromatic compounds such as styrene, alpha-methyl styrene, vinyltoluene, p-chlorostyrene, p-tert-butylstyrene and the like; and polymerizable nitriles such as acrylonitrile, methacrylonitrile and the like.

The proportions of the monomers used in combination with the vinylic monomer having a glycidyl group maybe determined such that the resulting vinylic copolymer (A) has the glass transition temperature of about 40° to 100°C. The preferable proportion of the alkyl or cycloalkyl esters of (meth)acrylic acid is 30 to 55 % by weight. The preferable proportion of the aromatic vinyl monomer is 0 to 30 % by weight. The preferable proportion of the other vinyl monomer is 0 to 30% by weight.

In the case where the acid anhydride (D) is not used, the vinylic copolymer (A) can be obtained by copolymerizing 45 to 70% by weight of a vinyl monomer having glycidyl group and other copolymerizable monomer. The use of the amount of the vinyl monomer having glycidyl group to be copolymerized less than 45% by weight impairs the scratch resistance of cured coating, whereas the amount of more than 70% by weight used reduces the storage stability of coating composition and finish appearance of cured coating.

The copolymerization of the vinyl monomer having glycidyl group and the other copolymerizable monomer can be carried out by conventional methods used for the synthesis of acrylic resins, vinylic resin or the like.

Different organic solvents such as heptane, toluene, xylene, octane, ethyl acetate, n-butyl acetate, isobutyl acetate, methyl cellosolve acetate, butylcarbitol acetate, methyl ethyl ketone, methyl isobutyl ketone, diisobutyl ketone, ethanol, isopropanol, n-butanol, sec-butanol, isobutanol, and the like, n-butyl ether, dioxane, ethylene glycol monomethyl ether, ethylene glycol monoethyl ether and the like can be used in the synthesis of the vinylic copolymer (A).

Representative radical polymerization initiators that can be used in the synthesis of (A) are benzoyl peroxide, tert-butylperoxy-2-ethylhexanoate and like peroxides, azobisisobutyronitrile, azobisdimethylvaleronitrile the like.

### Preparation of Vinylic Copolymer of Glycidyl Methacrylate (Vinylic Copolymer A-1)

In a round bottom flask equipped with a stiffer, a thermometer and a relux condensor was placed 1,600 parts of toluene. The round bottom flask was heated until the toluene started refluxing. To the refluxing solution of toluene was added a mixture of 160 parts of glycidyl methacrylate and 5 parts of azobisisobutyronitrile, in portions, over a period of 2 hours. The resulting mixture was further refluxed for 3 hours after which time the toluene was removed. As the temperature of this reaction mixture reached 150°C, residual toluene was removed under reduced pressure. This concentrated reaction mixture was then cooled to yield the vinylic copolymer of glycidyl methacrylate (A-1).

The glass transition temperature of the copolymer of A-1 was 68°C, and the copolymer had an average molecular weight of 3,000.

Table 1 lists vinylic copolymers, A-1 to A-7, that were prepared by the above procedure. Table 1 also lists the glass transition temperatures and the average molecular weight of each of the vinylic copolymers A-1 to A-7.

**Table 1**

| No. of Production Example | | A-1 | A-2 | A-3 | A-4 | A-5 | A-6 | A-7 |
|---|---|---|---|---|---|---|---|---|
| Monomers (% by weight) | Glycidyl Methacrylate | 50 | 65 | 50 | 50 | 35 | 75 | 50 |
| | n-Butyl Methacrylate | 5 | | 25 | | 15 | | 45 |
| | Methyl Methacrylate | 30 | 20 | 10 | 50 | 35 | 10 | |
| | Styrene | 15 | 15 | 15 | | 15 | 15 | 5 |
| Characteristics of Copolymers | Glass Transition Temperature (°C) | 68 | 64 | 51 | 73 | 67 | 58 | 36 |
| | Number Average Molecular Weight | 3,000 | 3,000 | 3,000 | 3,000 | 3,000 | 3,000 | 3,000 |

### ALIPHATIC DIBASIC ACID (B)

The aliphatic dibasic acid (B) used in the present invention is a saturated or unsaturated aliphatic dibasic acid having two or more carbon atoms. Examples of such dibasic acids include succinic acid, glutaric acid, adipic acid, pimelic acid, azelaic acid, sebacic acid, dodecanoic acid, brassidic acid, itaconic acid, maleic acid, citraconic acid, eicosanoic acid, and the like. Dodecanoic acid is preferred.

### BLOCKED POLYISOCYANATE COMPOUND (C)

The blocked polyisocyanate compound (C) used in the present invention is a solid compound having a melting point of about from 60° to 140°C, preferably 70° to 110°C. The blocked polyisocyanate compound (C) can be obtained by the reaction of a block agent such as phenols, caprolactones, alcohols, and the like, and an aliphatic, alicyclic, or aromatic polyisocyanate compound such as isophorone diisocyanate, hexamethylene diisocyanate, hydrogenated diphenylmethane diisocyanate, hydrogenated xylylene diisocyanate, hydrogenated tolylene diisocyanate, xylylene diisocyanate, tolylene diisocyanate, and the like, preferably isophorone diisocyanate, hexamethlene diisocyanate, hydrogenated diphenylmethane diisocyanate, hydrogenated xylylene diisocyanate and hydrogenated tolylene diisocyanate.

### ACID ANHYDRIDE (D)

The acid anhydride (D) used in the present invention is preferably solid at room temperature, has at least one acid anhydride group, and has a melting point of about from 40° to 150°C. Examples of such acid anhydrides include phthalic anhydride, p-chlorophthalic anhydride, tetrabromophthalic anhydride, cyclohexane-1,2-dicarboxylic anhydride, 4-methylhexane-1,2-dicarboxylic anhydride, cyclopentane-1,2-dicarboxylic anhydride, dodecylsuccinic anhydride, succinic anhydride, maleic anhydride, methylsuccinic anhydride, azelaic anhydride, polyadipic anhydride, polyazelaic anhydride, polysebasic anhydride, polydodecanoic anhydride, polyeicosanoic anhydride and the like. Polyeicosanoic anhydride and polydodecanoic anhydride are preferred.

### ANTIOXIDANT (E)

Examples of antioxidants (E) which can be used in the present invention are phenolic antioxidants, organo sulfur antioxidants and phosphite antioxidants. Phenolic antioxidants include alkylphenol, monoalkylenedialkylphenol, dialkylenetrialkylphenol, tetraalkylphenol, bisphenol monosulfite, polyphenol and the like.

Preferred phenolic antioxidants are 4,4' butylidenebis(3-methyl-6-tert-butylphenol) Formula (I), tetrakis-[methylene-3-(3',5'-di-tert-butyl-4'-hydroxyphenyl) propionate] methane as shown in Formula (II), 1,3,5-trimethyl-2,4,6-tris(3,5-di-tert-butyl-4-hydroxybenzyl) benzene as shown in Formula (III) and tris-(3,5-di-tert-butyl-4-hydroxybenzyl)-isocyanurate as shown in Formula (IV).

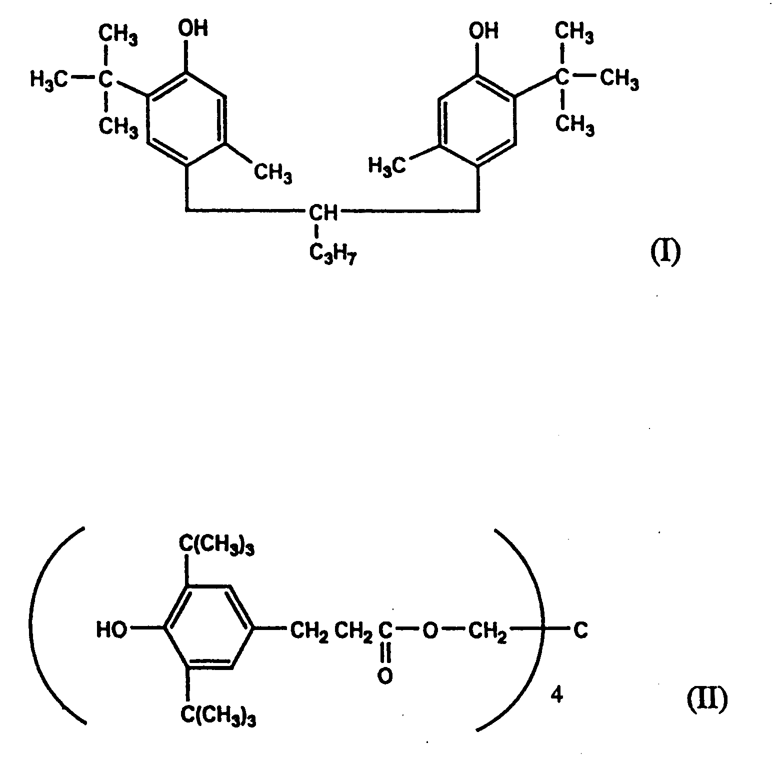

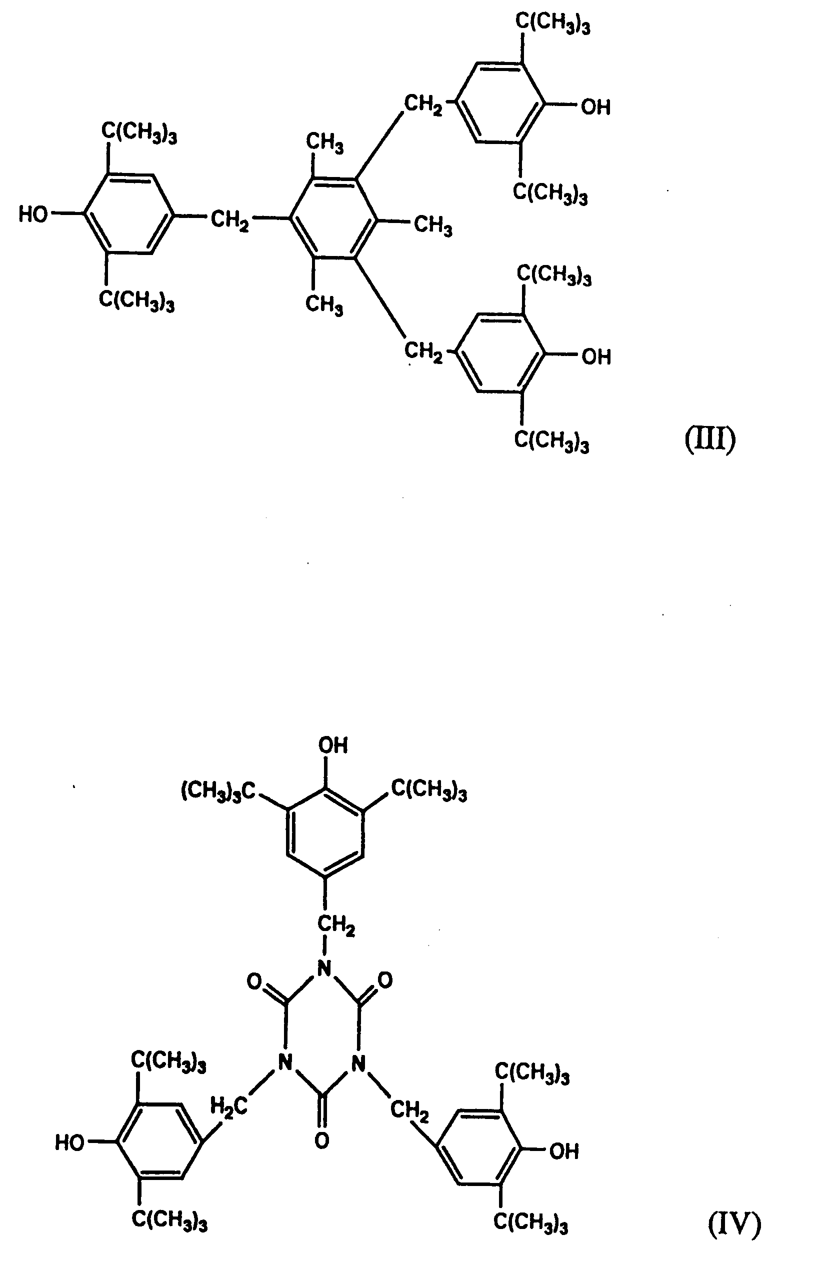

Other useful antioxidants include organo sulfur antioxidants such as di-higher alcohol esters of 3,3'-thiodipropionic acid, pentaerythrithyl tetrakis(3-laurylthiopropionate), 2-mercaptobenzimidazole and the like, phosphite antioxidants such as triphenyl phosphite, tris(nonylphenyl)phosphite, tris(2,4-di-tert-butylphenyl)phosphite, cyclic neopentanetetraylbis(octadecyl phosphite), and the like.

These antioxidants can be used alone or in combination of two or more.

The coating compositions of the present invention can be applied to metal panels such as iron, steel, alminum, zinc and the like, or to surfaces chemically treated with zinc phosphate, iron phosphate or the like, to primer or intermediate coated surfaces so that the cured film thickness is about from 10 to 200 micrometers. The present compositions can be applied by electrostatic coating, for example, or by any other convenient means. The cured coating film can be obtained by baking the said composition for about 20 to 60 minutes at a temperature ranging from about 150° to 200°C.

### Examples 1 to 11 and Comparative Examples 1 to 6

Thermosetting vinylic powder coating compositions of the present invention, Examples 1 - 11, and comparative compositions, Examples 1-6, were prepared by the following method:

Individual components (A), (B), (C), (D), (E) and a curing catalyst were respectively mixed in a dry blender at room temperature and then heated in an extruder to melt blend the components.. The samples upon cooling were reduced to fine a powder by a pin disc mill, filtered through a strainer of 150 mesh to yield the respective compositions.

Table 2 lists the amount of the respective components in the different examples. The symbols in Table 2 have the following meaning:
- B-1:: dodecanoic acid
- C-1:: epsilon-caprolactam blocked isophorone diisocyanate isocyanurate, a product of Huls Co. having a trade name of "VESTAGON B1530", mp = about 90 °C
- C-2:: methyl ethyl ketone blocked isophorone diisocyanate isocyanurate, a product of GARGILL Co. having a trade name of "CURING AGENT 24-2405:, mp = about 80 °C
- C-3:: epsilon-caprolactam blocked hexamethylene diisocyanate isocyanurate, a product of GARGILL Co. having a trade name of "CURING AGENT 24-2430", mp = about 90 °C
- D-1:: polyeicosanoic anhydride, a product of OKAMURA SEIYU Co. having a trade name of "SL-20AH:, acid anhydride equivalent = 240 to 275, mp-about 90 °C
- D-2:: polydodecanoic anhydride, a product of OKAMURA SEIYU Co. having a trade name of "SL-12AH", acid anhydride equivalent = 160 to 185, mp=about 80 °C
- E-1:: tetrakis-[methylene-3-(3',5'-di-tert-butyl-4'-hydroxy-phenyl) propionate] methane, a product of CIBA-GAIGY Co. having a trade name of "IRGANOX 1010"
- E-2:: cyclic neopentanetetraylbis(octadecyl phosphate), a product of ASAHI DENKA KOGYO Co. having a trade name of "ADEKASTAB PEP8"
- E-3:: tetrakis-(3-lauryl thiopropionate)methane, a product of ASAHI DENKA KOGYO Co. having a trade name of "ADEKASTAB AO-412S"
- DBTDL:: dibutyltin dilaurate

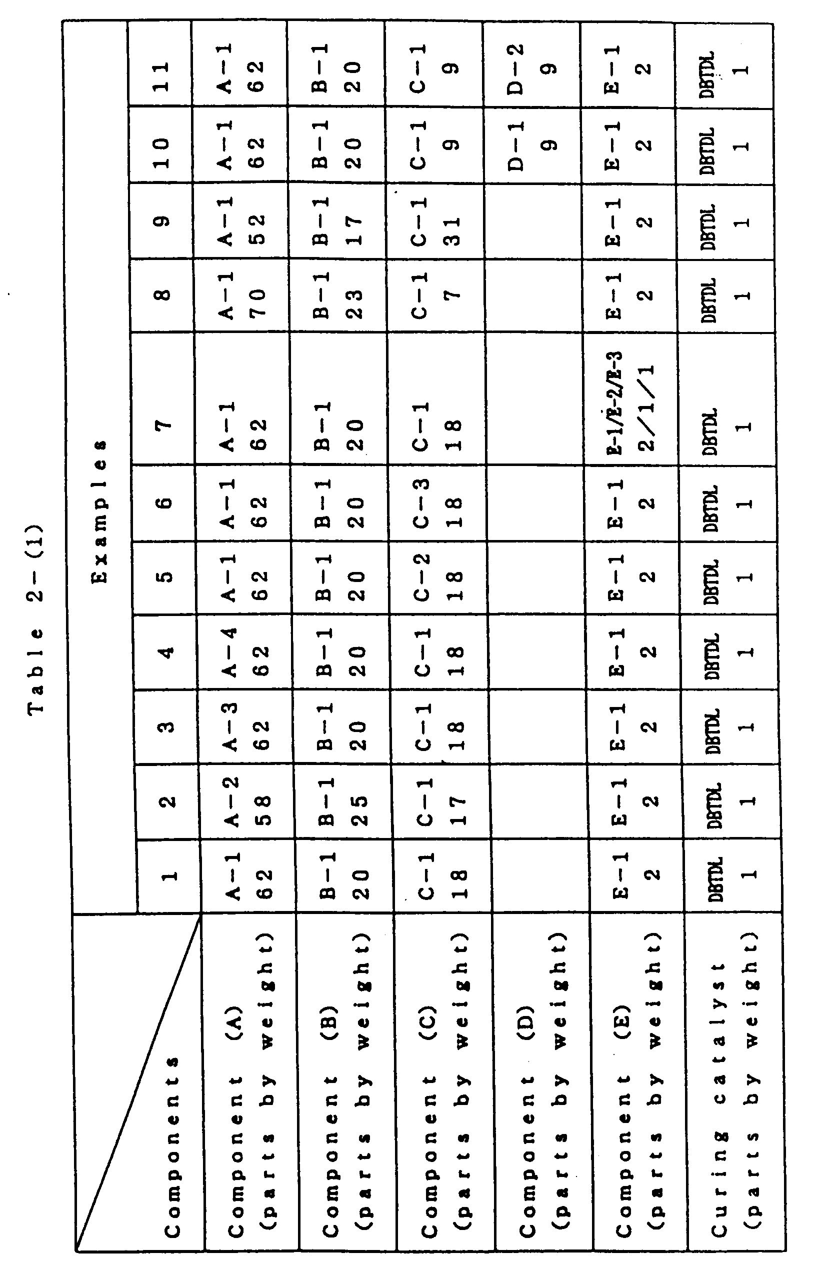

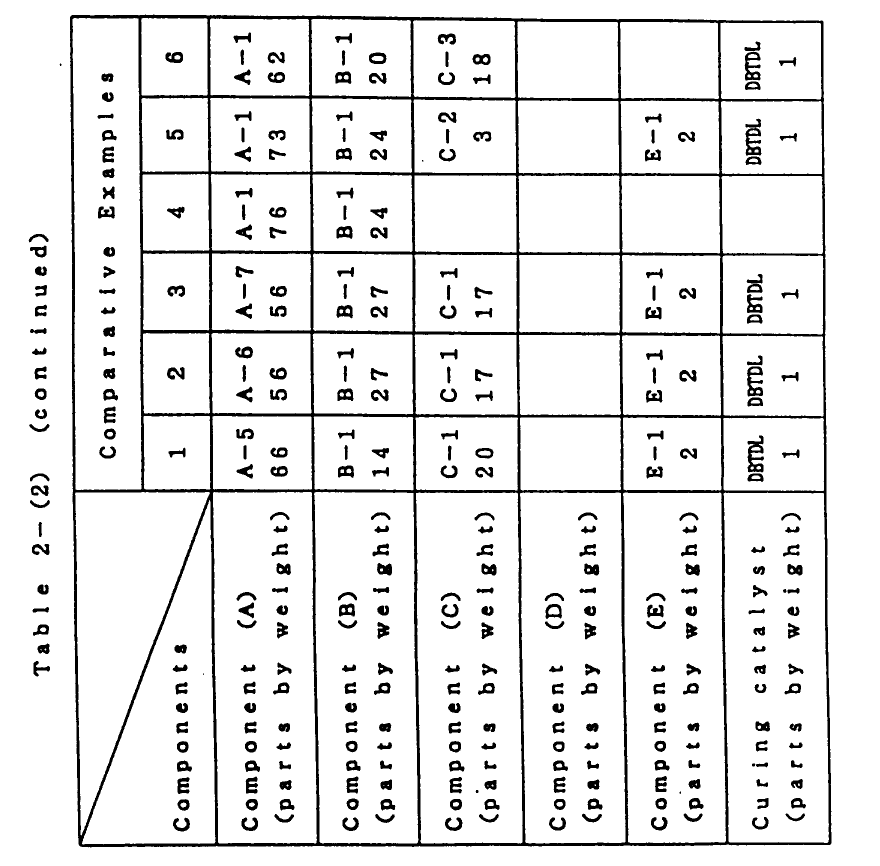

### PERFORMANCE TEST RESULTS:

On a mild steel sheet treated with zinc phosphate was formed a cationic electrodeposition coating film (film thickness: 20 micrometer when cured) and an intercoat coating film (film thickness: 20 micrometer when cured) followed by wet sanding by #400 sand paper and drying. MAGICRON BASECOAT HM-22 (tradename, a metallic basecoat composition of KANSAI PAINT Co.) was applied thereon (film thickness: 15 micrometer when cured) and heated to about 140°C for 30 minutes in an electric oven. Then, each of the foregoing powder coating compositions, Examples 1-11 and Comparative Examples 1-6, was applied thereon (film thickness: 70 micrometer when cured) and heated to about 160°C for 30 minutes. Table 3 shows the results obtained by the performance tests of the films together with other results as explained below:

### Caking of composition:

The coating composition was placed into a cylindrical vessel, 6 centimeters tall, with a bottom area of about 20 square centimeters, and stored at 30°C for 7 days. The degree of caking is indicated by letters A, B, or C, where:
A: No caking
B: Caking the size of grains of rice
C: Whole caking
Storage stability of composition: The coating composition was placed into a vessel, sealed and stored at 30°C for 1 month. The stored coating composition was applied as described earlier, (film thickness: 70 micrometer when cured) and heated at 160°C for 30 minutes. The coating surface was evaluated according to the following criteria:
A: There was no or little difference between the finish appearance using the composition after storage and the finish appearance using the composition without or before storage.
B: The finish appearance using the composition after storage was a little inferior to the finish appearance using the composition without or before storage.
C: The finish appearance using the composition after storage was remarkably inferior to the finish appearance using the composition without or before storage.
Finish appearance of cured film: Evaluated with an unaided eye from the viewpoint of gloss and smoothness according to the following criteria.
A: Good.
B: No good.
60 Degree gloss of cured film: 60 Degree specular reflection value was measured.
Scratch resistance (A) of cured film: The coated test panel was stuck on the roof of a car and washed by an automatic car-washing machine (PO 20 FWRC, tradename, a product of YASUI Co.) 5 times. Then, the surface of the panel was observed with unaided eye using to the following criteria:
S: No scratches
A: Slight degree of scratches
B: Moderate degree of scratches
C: Remarkable degree of scratches
Scratch resistance (B) of cured film: The test panel was stuck on the roof of a car and washed by an automatic car-washing machine (PO 20FWRC, tradename, a product of YASUI Co.) 10 times. Then, the surface of the panel was observed with unaided eye according to the following criteria:
S: No scratches
A: Slight degree of scratches
B: Moderate degree of scratches
C: Remarkable degree of scratches
Yellowing of cured film: A standard panel was prepared by spraying MAGICRON CLEAR COAT (tradename, a solvent-based clear composition of KANSAI PAINT Co.) with film thickness of about 40 micrometer when cured and heating at 140°C for 30 minutes in an electric oven. Yellowing of the cured film was evaluated by comparing the degree of yellowing of the test panel with that of the standard panel according to the following criteria:
S: No yellowing
A: Slight degree of yellowing
B: Moderate degree of yellowing
C: Remarkable degree of yellowing
Weatherability of cured film: The test panel was placed in a sunshine weatherometer for 1,500 hours. Thereafter, the surface of the panel was evaluated according to the following criteria:
A: No change
B: Slight degree of dulling and cracking
C: Remarkable degree of dulling and cracking

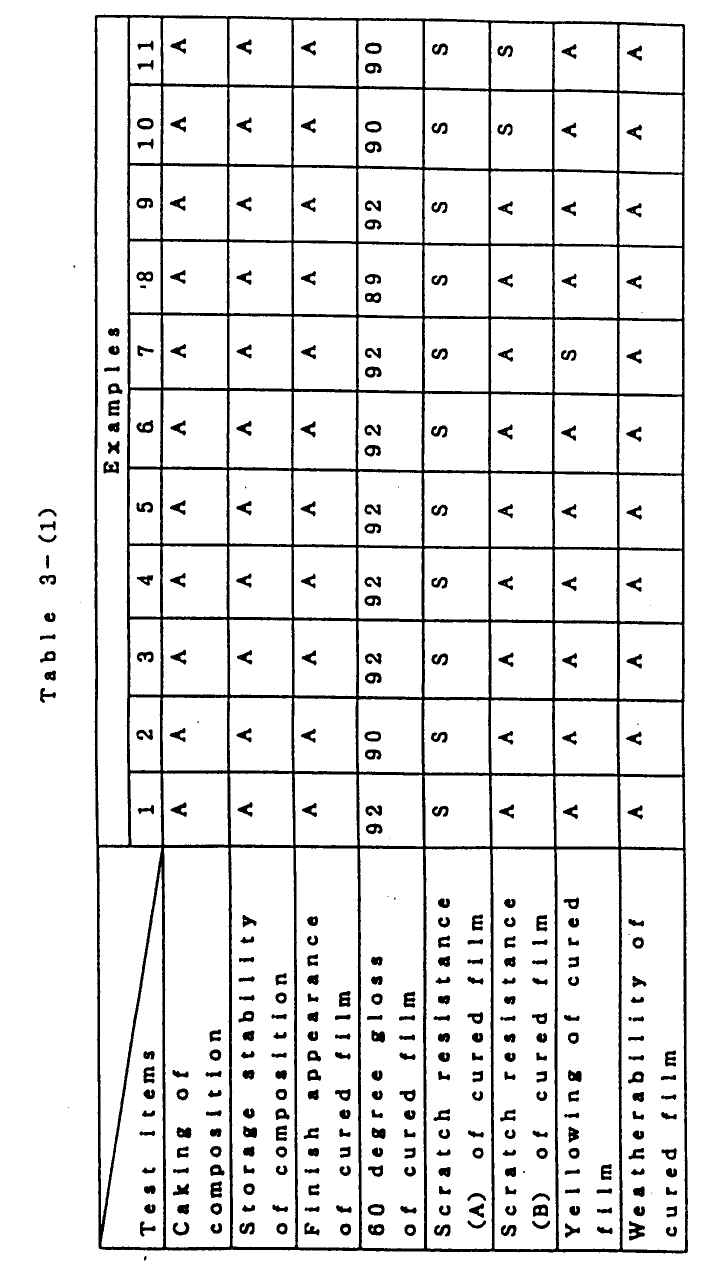

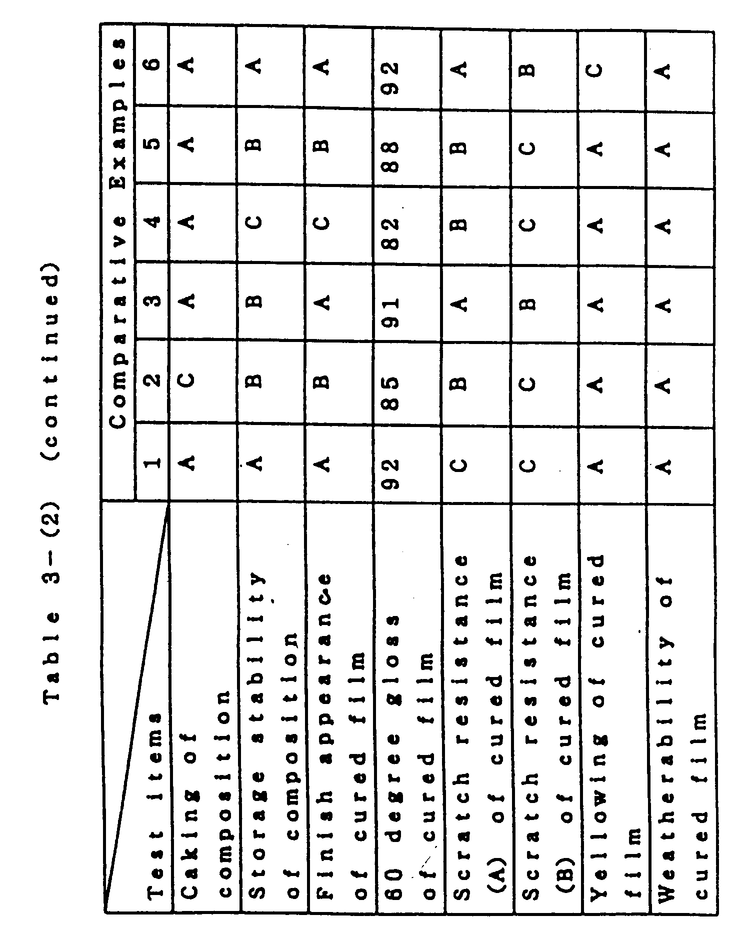

## Claims

1. A thermosetting vinylic powder coating composition which comprises:
(A) about from 40 to 85% by weight of vinylic copolymer having glycidyl functionality;
(B) about from 5 to 25% by weight of aliphatic dibasic acid;
(C) about from 5 to 35% by weight of blocked polyisocyanate compound;
(D) optionally up to about 35% by weight of acid anhydride, and
(E) antioxidant in an amount of 0.1 to 5% by weight; the total amount of components (B), (C), (D) and (E) being in the range 15 to 60% by weight.

2. A coating composition according to Claim 1 wherein the vinylic copolymer is prepared from at least one vinyl monomer selected from glycidyl acrylate and glycidyl methacrylate.

3. A coating composition according to claim 1 or 2 wherein the vinylic copolymer having glycidyl functionality has a glass transition temperature of about from 40° to 100°C and has an average molecular weight of about from 1,500 to 15,000.

4. A coating composition according to any preceding claim wherein the aliphatic dibasic acid consists essentially of dodecanoic acid.

5. A coating composition according to any preceding claim wherein the blocked polyisocyanate compound has a melting point of about from 60° to 140°C.

6. A coating composition according to claim 5, wherein the blocked polyisocyanate compound is selected from isophorone diisocyanate, hexamethylene diisocyanate, hydrogenated diphenylmethane diisocyanate, hydrogenated xylylene diisocyanate and hydrogenated tolylene diisocyanate.

7. A coating composition according to any preceding Claim wherein the antioxidant consists essentially of at least one phenolic compound.

8. A coating composition according to Claim 7, wherein the phenolic compound is selected from 4,4'-butylidenebis(3-methyl-6-tert-butylphenol), tetrakis[methylene-3-(3',5'-di-tert-butyl-4'-hydroxyphenyl)propionate]methane, 1,3,5-trimethyl-2,4,6-tris(3,5-di-tert-butyl-4-hydroxybenzyl)benzene and tris-(3,5-di-tert-butyl-4-hydroxybenzyl)isocyanurate.

9. A coating composition according to any preceding claim including at least about 10% by weight of aliphatic dibasic acid and no acid anhydride (D); and wherein component (A) contains 45 to 70% by weight of vinyl monomer having a glycidyl group.

10. A thermosetting vinylic powder coating composition of any of Claims 1-8 comprising at least about 5% by weight of component (D).

11. A coating composition according to claim 10, wherein the acid anhydride is selected from polyeicosanoic anhydride and polydodecanoic anhydride.
